# EUROPEAN PATENT APPLICATION

(11) **EP 0 738 088 A2**
(43) Date of publication of application: **16.10.1996**
(21) Application number: 96400771.0
(22) Date of filing: 10.04.1996
(51) Int. Cl.: H04N 9/83

(54) **PAL-plus signal interface circuit**

(30) Priority: 11.04.1995 KR 9583067
(71) Applicant: LG ELECTRONICS INC., Seoul (KR)
(72) Inventor: Jeong, Hansik, Suwon, Kyungki-Do (KR)
(74) Representative: Fort, Jacques

(57) **Abstract**

A PAL-PLUS signal interface circuit of a VCR is disclosed including: a switching control signal generator (100A) for detecting a PAL-PLUS broadcasting signal received through broadcasting signal receiving means, generating mark signals indicating an area in which a wide-screen signaling bit and a helper signal are buried, and modifying the wide-screen signaling bit; a luminance/chrominance signal separator (100B) for separating a luminance signal and a chrominance signal from the PAL-PLUS broadcasting signal or modulating the helper signal contained in the PAL-PLUS broadcasting signal, according to the mark signal; a chroma-video-blanking synchronizing (CVBS) signal recorder (100C) for mixing the luminance signal generated from the luminance/chrominance signal separator with the helper signal according to the mark signal, inserting the wide-screen signaling bit generated from the switching control signal generator in the mixed signal, and mixing the inserted signal with the chrominance signal generated from luminance/chrominance signal separator, to be applied to a recording head (117); and a luminance/chrominance signal generator (100D) for mixing, according to the mark, the helper signal with the chrominance signal, to be supplied to a luminance/chrominance signal separate jack (121), or supplying the chrominance signal to the luminance/chrominance signal separate jack (121).

## Description

### BACKGROUND OF THE INVENTION

The present invention relates to a PAL-PLUS signal interface circuit and, more particularly, to a PAL-PLUS signal interface circuit for preventing a vertical helper signal from damaging when luminance and chrominance signals are separated from a chroma-video-blanking synchronizing signal in a PAL-PLUS VCR (Video Cassette Recorder) and appropriately performing color plus for the separated luminance and chrominance signals in a PAL-PLUS TV set.

When separating a chroma-video-blanking synchronizing signal (CVBS signal) into a luminance signal Y and a chrominance signal C to be recorded in a typical PAL-PLUS VCR, a helper signal in a chrominance signal area is moved to a luminance signal area. However, if a video signal recorded in the VCR is displayed on a TV set, since a demodulated helper signal exists in the luminance signal area, the helper signal is not detected in the PAL-PLUS TV set and a wide vision function of 16:9 is not implemented.

In order that the video signal reproduced in the VCR is monitored in the TV set, an additional connection jack is used. In the PAL-PLUS VCR, the luminance and chrominance signals are transferred via a separated jack, a superjack for example, and the helper signal demodulated by a VCR signal processor exists in the luminance signal area. Therefore, the demodulated helper signal differs from the initial CVBS signal. Moreover, when the VCR is reproduced, since the helper signal generated from a line jack exists in the luminance signal area, a PAL-PLUS decoder of the TV set does not operate.

### SUMMARY OF THE INVENTION

Therefore, it is an object of the invention to provide a PAL-PLUS signal interface circuit for storing a helper signal in a luminance signal area when recording a CVBS signal in a tape, separating the helper signal during reproducing, so that the separated helper signal is transmitted to a chrominance signal area, and a line jack of a VCR.

It is an another object of the invention to provide a PAL-PLUS signal interface circuit for outputting the helper signal included in a CVBS signal to an external line jack, thereby causing an recorded video signal to be modified when recording a CVBS signal in a tape.

It is an another object of the invention to provide a PAL-PLUS signal interface circuit for processing a PAL-PLUS signal in response to discriminating the existence of an inputted CVBS signal when a video signal is outputted to a line jack, a super jack for example.

In accordance with one aspect of the invention, a PAL-PLUS signal interface circuit includes: a switching control signal generator for detecting a PAL-PLUS broadcasting signal received through broadcasting signal receiving means, generating mark signals indicating an area in which a wide-screen signaling bit and a helper signal are buried, and modifying the wide-screen signaling bit; a luminance/chrominance signal separator for separating a luminance signal and a chrominance signal from the PAL-PLUS broadcasting signal or modulating the helper signal contained in the PAL-PLUS broadcasting signal, according to the mark signal; a CVBS signal recorder for mixing the luminance signal generated from the luminance/chrominance signal separator with the helper signal according to the mark signal, inserting the wide-screen signaling bit generated from the switching control signal generator in the mixed signal, and mixing the inserted signal with the chrominance signal generated from luminance/chrominance signal separator, to be applied to a recording head; and a luminance/chrominance signal generator for mixing, according to the mark signal, the helper signal with the chrominance signal generated from the luminance/chrominance signal separator, to be supplied to a luminance/chrominance signal separate jack, or supplying the chrominance signal to the luminance/chrominance signal separate jack.

### BRIEF DESCRIPTION OF THE ATTACHED DRAWINGS

Fig. 1 is a block diagram of an interface circuit for the luminance/chrominance signal separation of a helper signal when a PAL-PLUS signal of a VCR is recorded, according to the present invention;
Fig. 2 is a block diagram of an interface circuit for the luminance/chrominance signal separation of a helper signal when a PAL-PLUS signal of a VCR is reproduced, according to the present invention;
Fig. 3 is a block diagram of an interface circuit between a TV set and a VCR for the color plus of a PAL-PLUS signal; and
Fig. 4 is a diagram showing a PAL-PLUS signal frame applied to the present invention.

### DETAILED DESCRIPTION OF PREFERRED EMBODIMENT

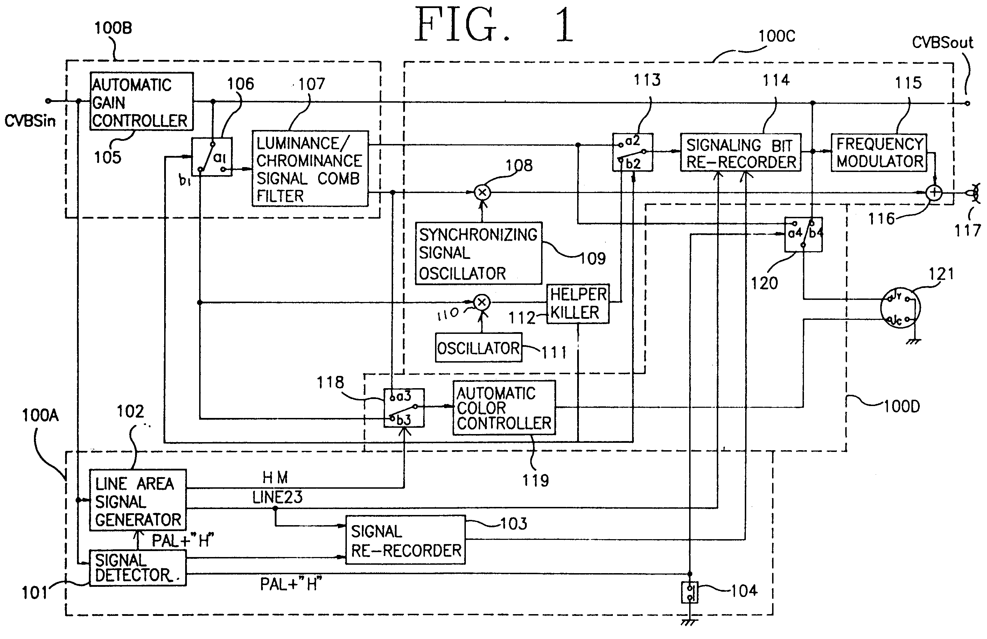

Referring to Fig. 1, an interface circuit for the luminance/chrominance signal separation of a helper signal when a PAL-PLUS signal is recorded includes a switching control signal generator 100A, a luminance/chrominance signal separator 100B, a CVBS signal recorder 100C and a luminance/chrominance signal generator 100D.

The switching control signal generator 100A generates a line-23 mark signal LINE23 for indicating an area in which a wide-screen signaling bit is buried from a CVBS signal, which is a PAL-PLUS broadcasting signal, received from an input terminal CVBSin via broadcasting signal receiving means, a helper mark signal HM for indicating an area in which a vertical helper signal is buried, and a PAL-PLUS detecting signal PAL+"H", and modifies the wide-screen signaling bit. The luminance/chrominance signal separator 100B adjusts a gain of the CVBS signal to be supplied to an output terminal CVBSout, and separates a luminance signal Y and a chrominance signal C from the CVBS signal according to the helper mark signal HM generated from the switching control signal generator 100A. The CVBS signal recorder 100C inserts the helper signal in a area of the luminance signal Y generated from the luminance/chrominance signal separator 100B according to the helper mark signal HM generated from the switching control signal generator 100A, and mixes the inserted helper signal with a low-pass converted chrominance signal, to be applied to a recording head 117 of a PAL-PLUS VCR. The luminance/chrominance signal generator 100D mixes, according to the helper mark signal HM generated from the switching control signal generator 100A, the vertical helper signal separated from the CVBS signal with the luminance signal Y generated from the luminance/chrominance signal separator 100B, to be supplied to a luminance/chrominance signal separate jack 121, or supplies, according to the PAL-PLUS detecting signal PAL+"H" generated from the switching control signal generator 100A, the chrominance signal C or the CVBS signal generated from the luminance/chrominance signal separator 100B to the luminance/chrominance signal separate jack 121.

The switching control signal generator 100A includes a signal detector 101 for receiving a baseband signal of the CVBS signal, detecting data of the wide-screen signaling bit buried in the 23-th video line by scanning a PAL-PLUS signal frame contained in the CVBS signal, and generating the PAL-PLUS detecting signal PAL+"H" according to the detected data. A line area signal generator 102 generates the line-23 mark signal LINE23 for indicating the area of a video line in which the wide-screen signaling bit is buried and the helper mark signal HM for indicating the area of the video line in which the vertical helper signal is buried by scanning the PAL-PLUS signal frame contained in the CVBS signal, according to the PAL-PLUS detecting signal PAL+"H" generated from the signal detector 101. A signal re-recorder 103 generates a new signaling bit by modifying the wide-screen signaling bit detected by the signal detector 101, according to the line-23 mark signal LINE23 generated from the line area signal generator 102. A select switch 104 used to select a normal broadcasting signal has one terminal receiving the PAL-PLUS detecting signal PAL+"H" generated from the signal detector 101 and the other terminal which is grounded.

The luminance/chrominance signal separator 100B has an automatic gain controller 105 for adjusting the gain of the CVBS signal received through the input terminal CVBSin to be supplied to the output terminal CVBSout, a switch 106 for bypassing the vertical helper signal contained in the CVBS signal generated from the automatic gain controller 105 or modulating it according to the helper mark signal HM generated from the line area signal generator 102 of the switching control signal generator 100A, and a luminance/chrominance signal comb filter 107 for separating the luminance signal Y and the chrominance signal C from the CVBS signal received through the switch 106.

In the CVBS signal recorder 100C, a multiplier 108 and a synchronizing signal oscillator 109 low-pass convert the chrominance signal C separated from the luminance/chrominance signal comb filter 107. A multiplier 110 and an oscillator 111 demodulate the modulated vertical helper signal received through the switch 106. A helper killer 112 bypasses the vertical helper signal demodulated by the multiplier 110 and the oscillator 111 or processes it to a black level according to the helper mark signal HM generated from the line area signal generator 102 of the switching control signal generator 100A. A switch 113 mixes the demodulated helper signal generated from the helper killer 112 with the luminance signal Y generated from the luminance/chrominance signal comb filter 107 according to the helper mark signal HM. A signaling bit re-recorder 114 re-records the wide-screen signaling bit generated from the signal re-recorder 103 in a signal generated from the switch 113 according to the line-23 mark signal LINE23 generated from the line area signal generator 102. A frequency modulator 115 frequency-modulates a signal generated from the signaling bit re-recorder 114. A mixer 116 mixes a signal generated from the frequency modulator 115 with the chrominance signal C generated from the multiplier 108, to be recorded in the recording head 117 of the PAL-PLUS VCR.

The luminance/chrominance signal generator 100D has a switch 118 for mixing the modulated vertical helper signal generated from the switch 106 of the luminance/chrominance signal separator 100B with the chrominance signal C separated from the luminance/chrominance signal comb filter 107, according to the helper mark signal HM generated from the area signal generator 102 of the switching control signal generator 100A, an automatic color controller 119 for adjusting an output signal of the switch 118, to be applied to the luminance/chrominance signal separate jack 121, and a switch 120 for selecting, according to the PAL-PLUS detecting signal PAL+"H" generated from the signal detector 101 of the switching control signal generator 100A, an output signal of the automatic gain controller 105 of the luminance/chrominance signal separator 100B or an output signal of the luminance/chrominance signal comb filter 107, to be applied to the luminance/chrominance signal separate jack 121.

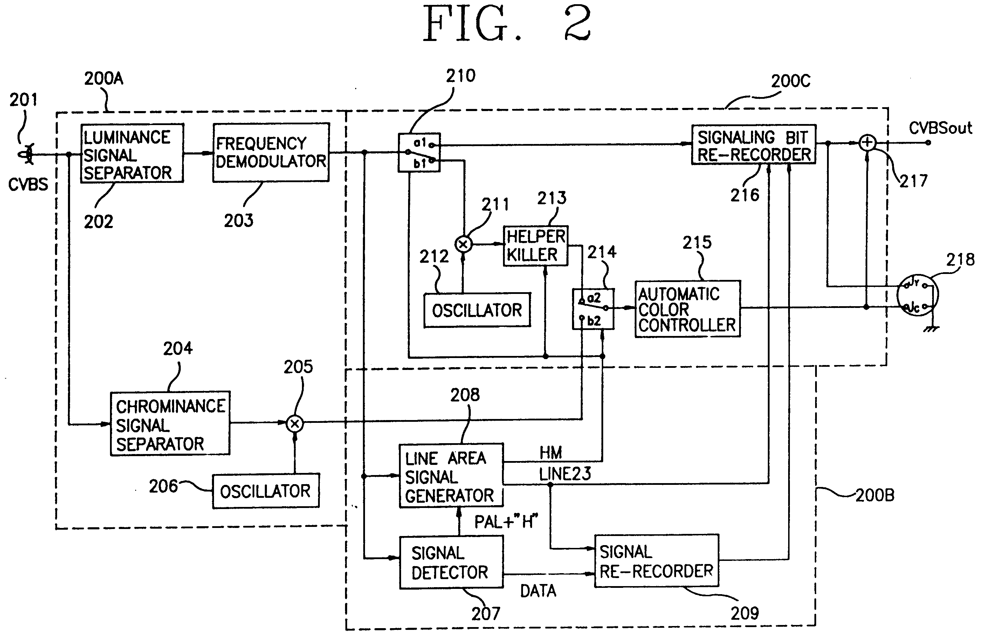

Fig. 2 shows an interface circuit for the luminance/chrominance signal separation of the helper signal when the PAL-PLUS signal of the VCR is reproduced. A luminance/chrominance signal separator 200A separates the luminance signal Y and the chrominance signal C from the CVBS signal reproduced by a reproducing head 201 of the PAL-PLUS VCR, modulates the separated luminance signal Y, and low-pass converts the separated chrominance signal C. A switching control signal generator 200B generates the line-23 mark signal LINE23 for indicating the area in which the wide-screen signaling bit is buried from the CVBS signal generated from the luminance/chrominance signal separator 200A and the helper mark signal HM for indicating the area in which the vertical helper signal is buried, and modifies the wide-screen signaling bit. A CVBS signal and luminance/chrominance signal generator 200C separates, according to the helper mark signal HM generated from the switching control signal generator 200B, a main luminance signal and a demodulated helper signal from the luminance signal Y generated from the luminance/chrominance signal separator 200A, clears the demodulated helper signal, and mixes the cleared helper signal with the chrominance signal C to be applied to a chrominance signal terminal J_{C} of a luminance/chrominance signal separate jack 218. Further, the CVBS signal and luminance/chrominance signal generator 200C generates a re-recorded luminance signal by inserting the line-23 mark signal LINE23 and a re-recorded wide-screen signaling bit in the 23-th video line, to be supplied to a luminance signal terminal J_{Y} of the luminance/chrominance signal separate jack 218, and mixes the re-recorded luminance signal with the separated chrominance signal C, to be applied to the CVBS signal output terminal CVBSout.

The luminance/chrominance signal separator 200A includes a luminance signal separator 202 for separating the luminance signal Y from the CVBS signal reproduced through the reproducing head 201 of the PAL-PLUS VCR, a frequency demodulator 203 for frequency-demodulating the luminance signal Y generated from the luminance signal separator 202, a chrominance signal separator 204 for separating the chrominance signal C from the CVBS signal reproduced through the reproducing head 201 of the PAL-PLUS VCR, and a multiplier 205 for reproducing an original chrominance signal by multiplying the chrominance signal C generated from the chrominance signal separator 204 by a given frequency generated from an oscillator 206.

In the switching control signal generator 200B, a signal detector 207 detects data of the wide-screen signaling bit buried in the 23-th video line by scanning the PAL-PLUS signal frame inserted in a normal luminance signal (main luminance signal) demodulated by the frequency demodulator 203 of the luminance/chrominance signal separator 200A, and generates the PAL-PLUS detecting signal PAL+"H" according to the detected data. A line area signal generator 208 generates, by scanning the PAL-PLUS signal frame inserted in the demodulated normal luminance signal, the line-23 mark signal LINE23 for indicating the area of the video line in which the wide-screen signaling bit is buried and the helper mark signal HM for indicating the area of the video line in which the vertical helper signal is buried, according to the PAL-PLUS detecting signal PAL+"H" generated from the signal detector 207. A signal re-recorder 209 generates a new signaling bit by modifying the wide-screen signaling bit detected by the signal detector 207, according to the line-23 mark signal LINE23 generated from the line area signal generator 208.

In the CVBS signal and luminance/chrominance signal generator 200C, a switch 210 generates a normal luminance signal or a demodulated helper signal according to the helper mark signal HM generated from the line area generator 208 of the switching control signal generator 200B. A multiplier 211 multiplies the helper signal generated from the switch 2201 by a given frequency generated from an oscillator 212 to be re-modulated. A helper killer 213 clears the area of the helper signal re-modulated by the multiplier 211 according to the helper mark signal HM. A switch 214 mixes the helper signal generated from the helper killer 213 with the chrominance signal generated from the multiplier 205 of the luminance/chrominance signal separator 200A according to the helper mark signal HM. An automatic color controller 215 adjusts an output signal of the switch 214, to be supplied to the luminance/chrominance signal separate jack 218. A signaling bit re-recorder 216 inserts, according to the line-23 mark signal LINE23 generated from the line area signal generator 208, the normal luminance signal generated from the switch 210 in the 23-th video line of a signal generated from the signal re-recorder 209, to be supplied to the luminance/chrominance signal separate jack 218. A mixer 217 mixes a video signal generated from the signaling bit re-recorder 216 with that generated from the automatic color controller 215, to be applied to the output terminal CVBSout.

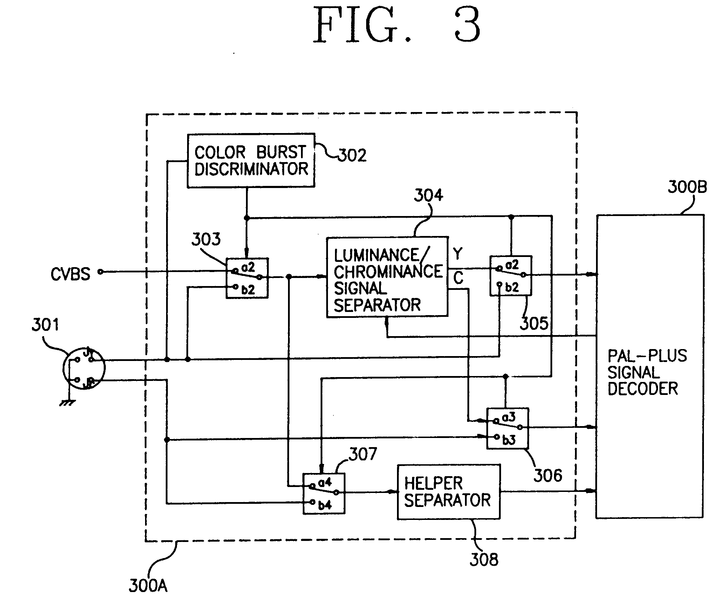

Referring to Fig. 3, an interface circuit between the TV set and the VCR for the color plus of the PAL-PLUS signal includes an input signal selector 300A and a PAL-PLUS signal decoder 300B. The input signal selector 300A confirms whether a color burst signal is generated from the luminance signal terminal J_{Y} of the luminance/chrominance signal separate jack 301, selectively generates the luminance signal and the chrominance signal by implementing color plus for the CVBS signal, and separates the helper signal from the CVBS signal received through the luminance/chrominance signal separate jack 301. The PAL-PLUS signal decoder 300B supplies an execution instruction of the color plus to the input signal selector 300A and decodes the luminance signal, the chrominance signal and the helper signal generated from the input signal selector 300A.

In the input signal selector 300A, a color burst discriminator 302 generates a switching control signal BUST"H" according to the video signal received from the luminance signal terminal J_{Y} of the luminance/chrominance signal separate jack 301. A switch 303 selects the CVBS signal or the luminance signal received through the luminance signal terminal J_{Y} of the luminance/chrominance signal separate jack 301, according to the switching control signal BUST"H" generated from the color burst discriminator 302. A luminance/chrominance signal separator 304 separates the luminance signal and the chrominance signal from a signal generated from the switch 303. A switch 305 selects, according to the switching control signal BUST"H" generated from the color burst discriminator 302, the luminance signal Y generated from the luminance/chrominance signal separator 304 or the luminance signal received through the luminance signal terminal J_{Y} of the luminance/chrominance signal separate jack 301, to be applied to the PAL-PLUS signal decoder 300B. A switch 306 selects, according to the switching control signal BUST"H" generated from the color burst discriminator 302, the chrominance signal C generated from the luminance/chrominance signal separator 304 or the chrominance signal received through the chrominance signal terminal J_{C} of the luminance/chrominance signal separate jack 301, to be supplied to the PAL-PLUS signal decoder 300B. A switch 307 selects a signal generated from the switch 303 or the chrominance signal received through the chrominance signal terminal J_{C} of the luminance/chrominance signal separate jack 301, according to the switching control signal BUST"H" generated from the color burst discriminator 302. A helper separator 308 separates the helper signal from a signal generated from the switch 307, to be supplied to the PAL-PLUS signal decoder 300B.

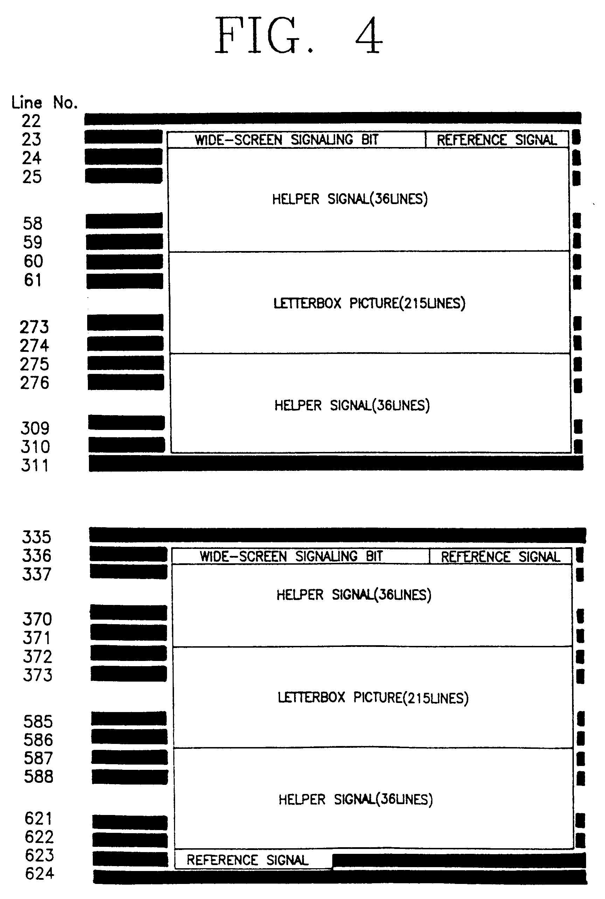

The operation for processing the color plus of the PAL-PLUS signal and separating the luminance and chrominance signals from the helper signal will now be described with reference to Figs. 1 and 4.

The signal detector 101 of the switching control signal generator 100A receives the baseband signal of the CVBS signal through the broadcasting signal receiving means and scans the PAL-PLUS signal frame, as shown in Fig. 4, contained in the CVBS signal. Thereafter, the signal detector 101 detects the data of the wide-screen signaling bit buried in the 23-th video line. If the detected data is for the PAL-PLUS signal, the signal detector 101 generates the PAL-PLUS detecting signal PAL+"H" of logic "high", and if not, it generates the PAL-PLUS detecting signal PAL+"H" of logic "low".

If the PAL-PLUS detecting signal PAL+"H" of logic "high" is received, the line area signal generator 102 of the switching control signal generator 100A scans the PAL-PLUS signal frame contained in the CVBS signal, and generates the line-23 mark signal LINE23 for indicating the area of the 23-th video line in which the wide-screen signaling bit is buried and the helper mark signal HM for indicating the areas of the 24-th to 59-th video lines, 275-th to 310-th video lines, 336-th to 371-th video lines and 587-th to 622-th video lines in which the vertical helper signal is buried.

If the PAL-PLUS detecting signal PAL+"H" of logic "low" is received, the line area signal generator 102 does not generate the line-23 mark signal LINE23 and the helper mark signal HM. The signal re-recorder 103 of the switching control signal generator 100A generates a new signaling bit by modifying the wide-screen signaling bit detected by the signal detector 101, according to the line-23 mark signal LINE23 generated from the line area signal generator 102.

The PAL-PLUS detecting signal PAL+"H" generated from the signal detector 101 is supplied to the select switch 104 for selecting the normal broadcasting signal. If the user turns on the select switch 104 in order to record the normal broadcasting signal, the PAL-PLUS detecting signal PAL+"H" is muted by a ground terminal.

The automatic gain controller 105 of the luminance/chrominance signal separator 100B adjusts the CVBS signal received through the broadcasting signal receiving means so as to have a proper gain level, and supplies the adjusted CVBS signal to the switch 106 and the output terminal CVBSout. If the helper mark signal HM is not supplied from the line area signal generator 102 of the switching control signal generator 100A, the switch 106 changes its terminal to a fixed terminal a1, to supply the CVBS signal generated from the automatic gain controller 105 to the luminance/chrominance signal comb filter 107. The luminance/chrominance signal comb filter 107 separates the luminance signal Y and the chrominance signal C from the CVBS signal, to be supplied to the CVBS signal recorder 100C.

If the helper mark signal HM is received, the switch 106 changes its terminal to a fixed terminal b1 at the area of the CVBS signal where the helper mark signal HM exists. Then the letterbox picture signal generated from the automatic gain controller 105 is supplied to the luminance/chrominance signal comb filter 107, and the vertical helper signal is separated by the switch 106 from the letterbox picture signal. The vertical helper signal contained in the CVBS signal received through the fixed terminal b1 of the switch 106 is demodulated by the multiplier 110 and the oscillator 111. The helper killer 112 processes the demodulated vertical helper signal to the black level according to the helper mark signal HM so as to be compatible with 4:3 TV, or bypasses the demodulated vertical helper signal with respect to the PAL-PLUS TV set. A signal generated from the switch 113 is supplied to the signaling bit re-recorder 114 which re-records the signaling bit by the line signal LINE23 and an output signal of the signal re-recorder 103, and further supplied to the mixer 116 via the frequency modulator 115.

The chrominance signal C separated from the luminance/chrominance signal comb filter 107 is low-pass converted by the multiplier 108 and the synchronizing signal oscillator 109. The low-pass converted chrominance signal is supplied to the mixer 116 which mixes the output signal of the frequency demodulator 115 with that of the multiplier 108, to be recorded in a recording medium through the recording head 117 of the PAL-PLUS VCR.

Consequently, the helper signal buried in the chrominance signal area is recorded in the luminance signal area through the above-described processes.

To supply the luminance signal Y and the chrominance signal C to a luminance signal terminal J_{Y} and a chrominance signal terminal J_{C} of the luminance/chrominance signal separate jack 121, the switch 118 switched by the helper mark signal HM generated from the line area signal generator 102 selects, in the helper area, the modulated helper signal received through the switch 106, and selects, in other areas, the chrominance signal C generated from the luminance/chrominance signal comb filter 107. The selected chrominance signal is supplied to the chrominance signal terminal J_{C} of the luminance/chrominance signal separate jack 121 through the automatic color controller 119.

If the signal detector 101 generates the PAL-PLUS detecting signal PAL+"H" of logic "high", that is, if the PAL-PLUS signal is detected from the CVBS signal, the switch 120 changes its terminal to a fixed terminal b4, to select the CVBS signal generated from the automatic gain controller 105. If the signal detector 101 generates the PAL-PLUS detecting signal PAL+"H" of logic "low", that is, if the PAL-PLUS signal is not detected from the CVBS signal, the switch 120 changes its terminal to a fixed terminal a4, to select the luminance signal Y generated from the luminance/chrominance signal comb filter 107. Therefore, the luminance signal selected by the switch 120 is supplied to the luminance signal terminal J_{Y} of the luminance/chrominance signal separate jack 121.

If the user turns on the select switch 104 in order to view the normal TV, since the PAL-PLUS detecting signal PAL+"H" generated from the signal detector 101 is muted by the ground terminal of the select switch 104, the luminance signal Y generated from the luminance/chrominance signal comb filter 107 is fixedly supplied to luminance signal terminal J_{Y} of the luminance/chrominance signal separate jack 121.

Now, a luminance/chrominance signal separation interfacing process of the helper signal when the PAL-PLUS signal is reproduced will be described with reference to Figs. 2 and 4.

The luminance signal Y and the chrominance signal C are respectively separated through the luminance signal separator 202 and the chrominance signal separator 204 from the CVBS signal reproduced through the reproducing head 201 of the PAL-PLUS VCR. The frequency demodulator 203 frequency-demodulates the separated luminance signal, to restore the normal luminance signal. The restored normal luminance signal is supplied to the switch 210, the line area signal guarantor 208 and the signal detector 207.

The signal detector 207 detects the data of the wide-screen signaling bit buried in the 23-th video line of the PAL-PLUS signal frame, and supplies the detected data to the signal re-recorder 209 and the PAL-PLUS detecting signal PAL+"H" to the line area signal generator 208. The line area signal generator 208 scans the PAL-PLUS signal frame, as shown in Fig. 4, inserted in the restored normal luminance signal, and generates the line-23 mark signal LINE23 in an area of the 23-th video line in which the wide-screen signaling bit is buried and the helper mark signal HM in the areas of the 24-th to 59-th video lines, 275-th to 310-th video lines, 336-th to 371-th video lines and 587-th to 622-th video lines in which the vertical helper signal is buried.

The signal re-recorder 209 converts the data generated from the signal detector 207 according to the line-23 mark signal LINE23, to be applied to the signaling bit re-recorder 216. The switch 210 switched by the helper mark signal HM supplies the normal luminance signal to the signaling bit re-recorder 216 and the demodulated helper signal to the multiplier 211. The multiplier 211 multiplies the helper signal by a given frequency generated from the oscillator 212 to re-modulate the helper signal. The helper killer 213 clears, according to the helper mark signal HM, the re-modulated helper signal so as to be compatible with the 4:3 TV, to be supplied to a fixed terminal a2 of the switch 214.

The chrominance signal C separated by the chrominance signal separator 204 is supplied to the multiplier 205. The multiplier 205 multiplies the chrominance signal C by a given frequency generated from the oscillator 206 to restore the original chrominance signal. The restored chrominance signal is supplied to a fixed terminal b2 of the switch 214. The switch 214 is switched by the helper mark signal HM and inserts the restored chrominance signal in the area of the cleared helper signal, to be applied to the automatic color controller 215. The automatic color controller 215 adjusts the color of an input signal, to be supplied to the chrominance signal terminal J_{C} of the luminance/chrominance signal separate jack 218.

The signaling bit re-recorder 216 inserts the video signal generated from the signal re-recorder 209 in the 23-th video line of the luminance signal received through a fixed terminal a1 of the switch 210 according to the line-23 mark signal LINE23. The re-recorded luminance signal is supplied to the mixer 217 and the luminance signal terminal J_{Y} of the luminance/chrominance signal separate jack 218. The mixer 217 mixes the luminance signal generated from the signaling bit re-recorder 216 with the chrominance signal generated from the automatic color controller 215, to be supplied to the output terminal CVBSout.

An interfacing process between the TV set and the VCR for the color plus of the PAL-PLUS signal will now be described with reference to Figs. 3 and 4.

The color burst discriminator 302 confirms whether the color burst signal is generated from the luminance signal terminal J_{Y} of the luminance/chrominance signal separate jack 301. If the color burst signal is detected, the color burst discriminator 302 judges that the CVBS signal is received through the luminance signal terminal J_{Y} and supplies the switching control signal BUST"H" of logic "high" to the switches 303, 305, 306 and 307. If the color burst signal is not detected, the color burst discriminator 307 generates the switching control signal BUST"H" of logic "low". When the CVBS signal is generated from the luminance signal terminal J_{Y} of the luminance/chrominance signal separate jack 301, the switch 303 changes its terminal to a fixed terminal a1 receiving the CVBS signal, to supply the CVBS signal to the luminance/chrominance signal separator 304. If the color plus execution instruction is given from the PAL-PLUS signal decoder 300B, the color plus operation for separating the luminance signal Y and the chrominance signal is executed.

The luminance signal Y and the chrominance signal C separated from the luminance/chrominance signal separator 304 are supplied to fixed terminals a2 and a3 of the switches 305 and 306, respectively. Since the switches 305 and 306 change their terminals to the fixed terminals a2 and a3 by the switching control signal BUST"H" of logic "high", the luminance signal Y and the chrominance signal C implementing the color plus operation are supplied to the PAL-PLUS signal decoder 300B and the PAL-PLUS signal is decoded.

If the CVBS signal is not generated from the luminance signal terminal J_{Y} of the luminance/chrominance signal separate jack, the color burst discriminator 302 generates the switching control signal BUST"H" of logic "low", and the switches 305 and 306 change their terminals to fixed terminals b2 and b3, respectively. The luminance signal Y and the chrominance signal C respectively generated from the luminance signal terminal J_{Y} and the chrominance signal terminal J_{C} of the luminance/chrominance signal separate jack 301 are supplied to the PAL-PLUS signal decoder 300B.

The switch 307 selectively generates the CVBS signal or the chrominance signal generated from the luminance/chrominance signal separate jack 301, according to the switching control signal BUST"H" generated from the color burst discriminator 302. The helper separator 308 separates the helper signal from the output signal of the switch 307, to be supplied to the PAL-PLUS signal decoder 300B. Therefore, the PAL-PLUS signal decoder 300B decodes the PAL-PLUS signal from the switches 305 and 306 and the helper separator 308.

As described above, in the video signal interface between the PAL-PLUS VCR and the TV set, the helper signal is recorded in the luminance signal area during recording, and the helper signal recorded in the luminance signal area is extracted to be transmitted to a chrominance signal path during reproducing. Therefore, the vertical helper is prevented from damaging and the noise caused by signal interference is reduced.

Further, the present invention includes the interface circuit of the TV set which is connected to the luminance/chrominance signal separate jack for inputting the CVBS signal, and thus implements the PAL-PLUS via the line jack.

## Claims

1. A PAL-PLUS signal interface circuit, comprising:
a switching control signal generating means for detecting a PAL-PLUS broadcasting signal received through broadcasting signal receiving means, generating mark signals indicating an area in which a wide-screen signaling bit and a helper signal are buried, and modifying said wide-screen signaling bit;
a luminance/chrominance signal separating means for separating a luminance signal and a chrominance signal from said PAL-PLUS broadcasting signal or modulating said helper signal contained in said PAL-PLUS broadcasting signal, according to said mark signal generated from said switching control signal generating means;
a chroma-video-blanking synchronizing signal recording means for mixing said luminance signal generated from said luminance/chrominance signal separating means with said helper signal according to said mark signal, inserting said wide-screen signaling bit generated from said switching control signal generating means in the mixed signal, and mixing the inserted signal with said chrominance signal generated from luminance/chrominance signal separating means, to be applied to a recording head; and
a luminance/chrominance signal generating means for mixing, according to said mark signal generated from said switching control signal generating means, said helper signal with said chrominance signal generated from said luminance/chrominance signal separating means, to be supplied to a luminance/chrominance signal separate jack, or supplying said chrominance signal generated from said luminance/chrominance signal separating means to said luminance/chrominance signal separate jack.

2. A PAL-PLUS signal interface circuit as set forth in claim 1, wherein said switching control signal generating means comprises:
a signal detecting means for detecting data of said wide-screen signaling bit buried in the 23-th video line of said PAL-PLUS broadcasting signal and generating a PAL-PLUS detecting signal according to the detected data;
a line area signal generating means for generating a line-23 mark signal indicating an area of a video line in which said wide-screen signaling bit is buried and a helper mark signal indicating an area of the video line in which a vertical helper signal is buried, according to said PAL-PLUS detecting signal generated from said signal detecting means;
a signal re-recording means for modifying said wide-screen signaling bit detected by said signal detecting means according to said line-23 mark signal generated from said line area signal generating means; and
a select switch for selecting a letterbox picture signal, said select switch having one terminal receiving said PAL-PLUS detecting signal generated from said signal detecting means and having the other terminal which is grounded.

3. A PAL-PLUS signal interface circuit as set forth in claim 1, wherein said luminance/chrominance signal separating means comprises:
a automatic gain controlling means for adjusting a gain of said PAL-PLUS broadcasting signal;
a switch for modulating said helper signal of said PAL-PLUS broadcasting signal generated from said automatic gain controlling means or bypassing said helper signal, according to said mark signal generated from said switching control signal generating means; and
a luminance/chrominance signal comb filter for separating said luminance signal and said chrominance signal from said PAL-PLUS broadcasting signal generated through said switch from said automatic gain controlling means.

4. A PAL-PLUS signal interface circuit as set forth in claim 1, wherein said chroma-video-blanking synchronizing signal recording means comprises:
a first multiplier and a synchronizing signal oscillator for low-pass converting said chrominance signal generated from said luminance/chrominance signal separating means;
a second multiplier and an oscillator for demodulating said helper signal generated from said luminance/chrominance signal separating means;
a helper killer means for processing said helper signal demodulated from said second multiplier and said oscillator to a black level or bypassing said helper signal, according to said mark signal generated from said switching control signal generating means;
a switch for mixing said helper signal generated from said helper killer means with said luminance signal generated from said luminance/chrominance signal separating means, according to said mark signal generated from said switching control signal generating means;
a signaling bit re-recording means for re-recording said wide-screen signaling bit generated from said switching control signal generating means in a signal generated from said switch, according to said mark signal generated from said switching control signal generating means;
a frequency modulator for frequency-modulating a signal generated from said signaling bit re-recording means; and
a mixer for mixing a signal generated from said frequency modulator with said chrominance signal generated from said first multiplier, to be applied to said recording head.

5. A PAL-PLUS signal interface circuit as set forth in claim 1, wherein said luminance/chrominance signal generating means comprises:
a first switch for mixing said helper signal with said chrominance signal generated from said luminance/chrominance separating means, according to said mark signal generated from said switching control signal generating means;
a automatic color controlling means for adjusting an output signal of said first switch, to be applied to said luminance/chrominance signal separate jack; and
a second switch for supplying said chrominance signal generated from said luminance/chrominance signal separating means or said PAL-PLUS broadcasting signal having an adjusted gain to said luminance/chrominance signal separate jack.

6. A PAL-PLUS signal interface circuit, comprising:
a broadcasting signal receiving means for receiving a chroma-video-blanking synchronizing(CVBS) signal of a PAL-PLUS broadcasting signal;
a helper mark signal detecting means for detecting a helper mark signal of said CVBS signal received via said broadcasting signal receiving means;
a video signal processing means for separating a luminance signal and a chrominance signal from said CVBS signal received via said broadcasting signal receiving means, and then processing said luminance signal and said chrominance signal;
a line jack for outputting a separated luminance signal and a separated chrominance signal to a TV set in accordance with a video signal from said video signal processing means; and
a control means for outputting said CVBS signal received via said broadcasting signal receiving means to said line jack when said helper mark signal is detected by said helper mark signal detecting means.

7. A PAL-PLUS signal interface circuit as set forth in claim 6, wherein said control means outputs said CVBS signal to a luminance signal port of said line jack.

8. A PAL-PLUS signal interface circuit, comprising:
a broadcasting signal receiving means for receiving a chroma-video-blanking synchronizing(CVBS) signal of a PAL-PLUS broadcasting signal;
a helper mark signal detecting means for detecting a helper mark signal of said CVBS signal received via said broadcasting signal receiving means;
a video signal processing means for separating a luminance signal and a chrominance signal from said CVBS signal received via said broadcasting signal receiving means, and then processing said luminance signal and said chrominance signal;
a line jack for outputting a separated luminance signal and a separated chrominance signal to a TV set in accordance with a video signal from said video signal processing means;
a control means for outputting said CVBS signal received via said broadcasting signal receiving means to said TV set via said line jack when said helper mark signal is detected by said helper mark signal detecting means;
a broadcasting signal discriminating means for discriminating whether a video signal inputted via said line jack is said CVBS signal or a letterbox picture signal; and
a PAL-PLUS signal processing means for separating a helper signal from said CVBS signal when said CVBS signal is discriminated by said broadcasting signal discriminating means, and then decoding said helper signal.

9. A PAL-PLUS signal interface circuit, comprising:
a luminance/chrominance signal separating means for separating a luminance signal and a chrominance signal from a recorded chroma-video-blanking synchronizing(CVBS) signal of a PAL-PLUS broadcasting signal;
a helper signal detecting means for detecting a helper signal included in said luminance signal outputted from said luminance/chrominance signal separating means;
a helper signal processing means for separating said helper signal detected by said helper signal detecting means from said luminance signal, and then mixing said helper signal into said chrominance signal outputted from said luminance/chrominance signal separating means under the control of said helper signal detecting means; and
a output means for outputting said chrominance signal from said helper signal processing means, and said luminance signal from said luminance/chrominance signal separating means via said helper signal processing means.

10. A PAL-PLUS signal interface circuit as set forth in claim 9, wherein said output means is an output terminal (CVBSₒᵤₜ) connected to a TV set.

11. A PAL-PLUS signal interface circuit as set forth in claim 9, wherein said output terminal is a line jack for separately outputting a luminance signal and a chrominance signal to a TV set.
